# EUROPEAN PATENT SPECIFICATION

(11) **EP 0 883 623 B1**
(45) Date of publication and mention of the grant of the patent: **05.03.2003**
(21) Application number: 97948419.3
(22) Date of filing: 19.11.1997
(51) Int. Cl.: C07F 7/00, C07F 11/00, C07F 17/00, C08F 4/642

(54) **PREPARATION OF CHIRAL TITANOCENES**
HERSTELLUNG VON CHIRALEN TITANOCENEN
PREPARATION DE TITANOCENES CHIRAUX

(30) Priority: 22.11.1996 WO PCT/US96/18666; 30.06.1997 US 885805
(43) Date of publication of application: 16.12.1998
(73) Proprietor: BOULDER SCIENTIFIC COMPANY, Mead, CO 80542 (US)
(72) Inventor: SULLIVAN, Jeffrey, M., Loveland, CO 80537 (US)
(74) Representative: Marchant, James Ian
(86) International application number: PCT/US97/21231
(87) International publication number: WO 98/022477

(56) References cited:
- EP-A- 0 697 419
- EP-A- 0 704 461
- DE-A- 19 739 946
- US-A- 5 329 033
- US-A- 5 532 396
- US-A- 5 616 747
- MACH, K. ET AL.: "effects of methyl substituents at the cyclopentadienyl ligand on the properties of C5H5TiCl3 and C5H5TiAl2Cl8-x(C2H5)x (x=0-4) complexes" JOURNAL OF ORGANOMETALLIC CHEMISTRY, vol. 333, 1987, pages 205-215, XP002121361

## Description

### FIELD OF THE INVENTION

This invention relates to the preparation of chiral titanocenes. More particularly, the invention relates to dialkylsilyl (2-alkyl-4-arylindenyl) metallocenes.

### BACKGROUND OF THE INVENTION

U.S. patent 5,629,254 at column 29, line 5, et. seq., describes compounds of the Formula Ia: 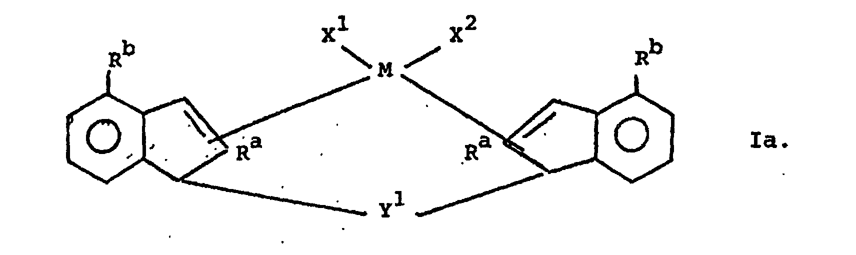 in which R^{a} may be a 1 to 20 carbon atom hydrocarbon group, (R^{b}) may be a 6 to 16 carbon atom aryl group, M may be titanium, zirconium or hafnium, X¹ and X² may be a halogen atom and Y¹ may be a divalent-silicon containing group.

The patent lists several examples of the Formula Ia compound. One such example is rac-dimethylsilyl-bis [(1-2-methyl-4-phenyl-indenyl)] zirconium dichloride (Col. 30, 11. 32-33). The patent states that

There may also be used the transition metal compounds obtained by substituting titanium metal or hafnium metal... for zirconium metal in the above-exemplified compounds. [Col. 32, 11. 5-9]

It appears that the sole reference to a method which may be useful for preparing the Formula Ia compounds is found at column 13, lines 21-25 of US Patent 5,629,254 which states:

The transition metal compounds according to the present invention can be prepared in accordance with the methods described in Journal of Organometallic Chem. 288 (1985), pages 63 to 67, European Patent Publication No. 0,320,762 specification and Examples thereof....

Neither reference specifically exemplifies the synthesis of any titanocene. Nor does any working example of US Patent 5,629,254 do so.

US Patent No. 5,616,747 describes a process for the preparation of a compound of the formula III 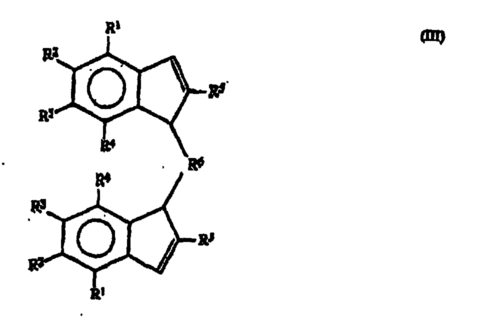 comprising,
deprotonating a solution of suspension of an indene of the formula I 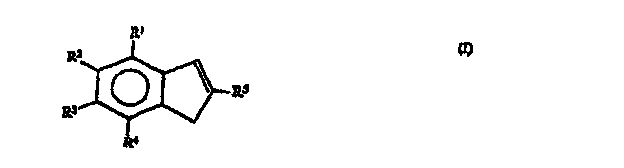 in a solvent or solvent mixture containing a base to give a suspension of a metallated product of the compound of formula I,
adding to the suspension of the metallated product a compound of the formula II

X-R⁶-X (II)

and reacting the suspension of the metallated product and compound of the formula II.

US Patent.No. 5,329,033 describes a catalyst system for olefin polymerization consists of a cocatalyst, preferably an aluminoxane, and a metallocene of the formula (I) 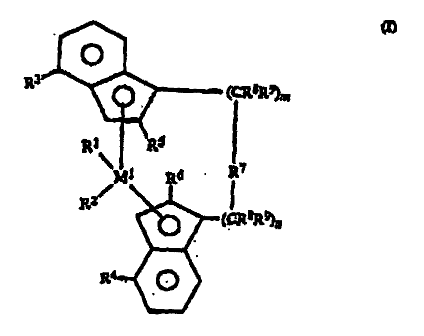 in which, preferably, M¹ is Zr, R¹ and R² are alkyl or halogen, R³ to R⁶ are alkyl, -(CR⁸R⁹)_{*m*}R⁷-(CR⁸R⁹)_{*n*}- is a chain having one or more members, in which R⁷ can also be a (substituted) hetero atom, and m+n is zero or 1. The catalyst system leads to polymers of variable molecular weight and stereotacticity, depending on the substituents R³ to R⁶ chosen, at polymerization temperatures which are relevant in industry.

EP-A-0,639,579 describes a process for preparing a metallocene which comprises reacting a metal compound which has at least two oxidation states and is selected from the group consisting of Group 4 to 10 metals, lanthanide metals and actinide metals, with a magnesium halide salt of a cyclopentadienyl containing ligand in the presence of an organic halide oxidizing agent so as to form the metallocene while simultaneously raising the oxidation state of the metal. The metal compound used in the method described in EP-A-0,639,579 is TiCl₃-(THF)₃.

### SUMMARY OF THE INVENTION

This invention provides a method for preparing the titanocene compounds of Formula Ia.

In a first step, a 2-alkyl-4-aryl indene is converted to a dialkali metal salt, preferably a dilithium salt.

The dialkali metal salt is then reacted in a second step with a dihalodialkyl silane to produce a bis-indenyl compound of Formula II: 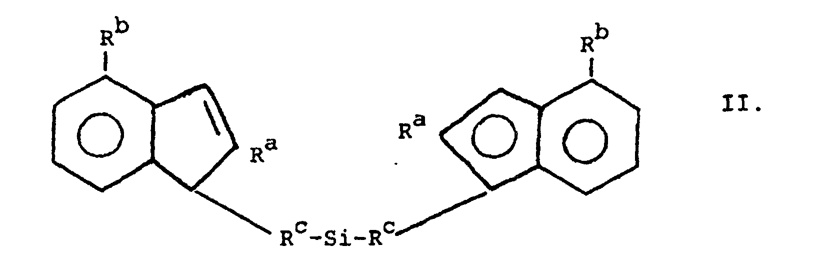 in which R^{a} and R^{b} are as described with respect to Formula Ia and in which R^{c} is a one to ten carbon atom alkyl group.

In a third step, the Formula II compound is combined with a titanium trichloride (TiCI₃) containing mixture formed by reacting titanium tetrachloride (TiCl₄) with an alkali metal alkyl compound, wherein a metallocene ligand is produced in which titanium is present in a plus three oxidation state. The titanium is oxidized to the plus four state, for example, by reaction with cuprous chloride or chloroform, wherein a reaction mixture which contains the desired titanocene of Formula III is produced.

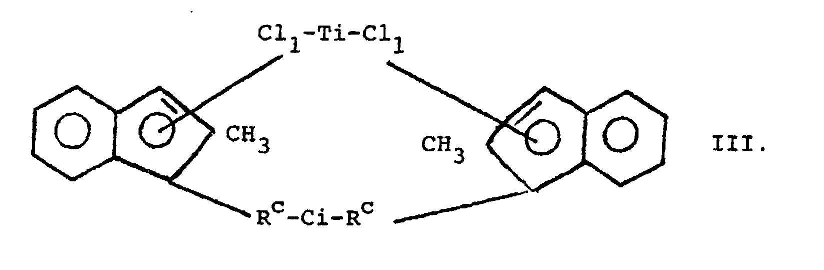

### BRIEF DESCRIPTION OF THE FIGURE

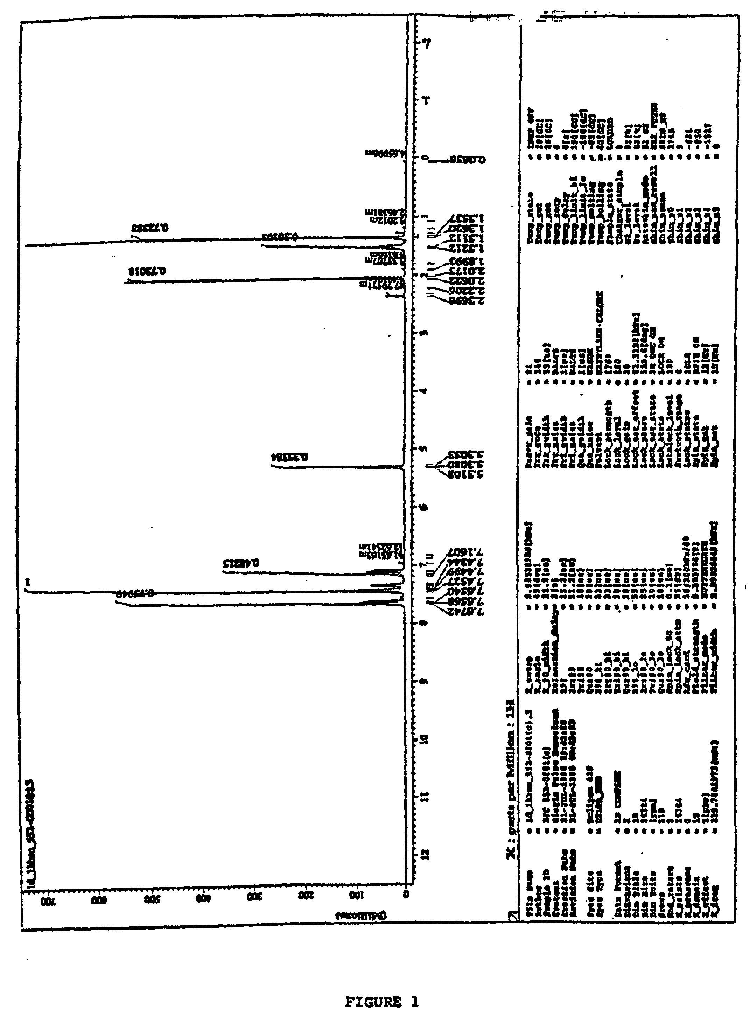

Figure 1 is a proton nuclear magnetic resonance (NMR) spectrum of rac-dimethylsilyl (2-tnethyl-4-phenyl indenyl) titanium dichloride acquired with a JEOL Eclipse 400 NMR spectrometer prepared by the method of the sample labelled 552-001(c).3.

### DETAILED DESCRIPTION OF THE INVENTION

A typical Formula Ia titanocene synthesis includes a first step in which a 2-alkyl-4-aryl indene having the Formula IV: 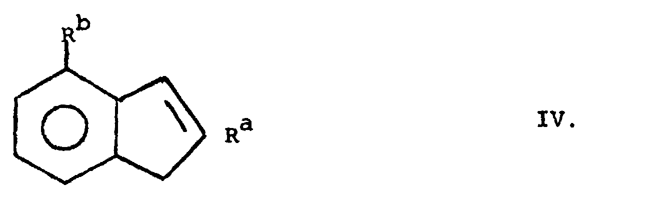 in which R^{a} and R^{b} are as previously described and which is reacted in a first reaction vessel with an alkali metal alkyl compound having the formula RM in which R is a straight or branched chain 2 to 10 carbon atom alkyl group and M is sodium, potassium or, preferably, lithium to provide a first reaction mixture which contains a dialkali metal salt of the Formula II compound. The reactants are combined in substantially stoichiometric amounts in a non-interfering, preferably hydrocarbon, medium.

Useful hydrocarbon media include aliphatic or aromatic hydrocarbons such as hexane, heptane, cyclohexane, benzene, toluene and xylene. Toluene is preferred.

In a second step, titanium tetrachloride in a second reaction vessel is reacted as in the first step in a non-interfering, preferably hydrocarbon medium as in the first step with an alkali metal alkyl compound RM to produce a second reaction mixture containing titanium trichloride.

The titanium trichloride containing mixtures are produced by the preferably stoichiometric (1:1) reaction of an organometallic compounds, such as n-butyl lithium or n-butyl magnesium chloride, with titanium tetrachloride in the non-interfering solvent medium. These mixtures are used directly without isolation of the titanium trichloride.

In a third step the first and second reaction mixtures are combined, for example, in the second reaction vessel for reaction to produce a titanocene catalyst ligand in which titanium is present in a plus three oxidation state. An oxidizing agent, e.g., cuprous chloride or chloroform, is added with agitation to produce a third reaction mixture in which the desired titanocene of Formula III is present as a mixture of rac solid and meso isomers.

The isomer mixture is separated from the reaction mixture and dried. The dry mixture of rac and meso isomers is resolved, for example, by treatment with a selective solvent preferably for the meso isomer to provide the rac isomer in substantially pure form. The isomer mixture may also be resolved by the method described in Gately application entitled "Preparation and Separation of Rac and Meso Compound Mixtures" filed June 9, 1997.

### EXAMPLE 1

### Preparation of Rac Me₂Si (2-Methyl-4-Phenylindenyl)-Titanium Dichloride

A first flask was charged with toluene (300 mL) and tetrahydrofuran (THF) (15g, 0.2 mol) and 2-methyl-4-phenylindene (21.2g, 0.2 mol). The mixture was cooled to -20°C followed by the addition of 1.6M butyllithium in hexanes (125 mL). The mixture which contained 2-methyl-4-phenylindene lithium was warmed to 25°C and stirred for four hours. The stirred contents were cooled to -20°C and dichlorodimethylsilane (12.9g) was added. The reaction mixture so formed was warmed to 25°C and stirred for 12-16 hours and then cooled to -20°C. 1.6 M butyllithium in hexanes (125 mL) was added and the contents of the first flask were then warmed to 25°C and stirred for eight hours. The first flask reaction mixture contained the dilithium salt of Me₂Si bis(2-methyl-4-phenylindene).

A second flask was charged with heptane (300 mL) and titanium tetrachloride (18.9g, 0.1 mol). 1.6 M butyllithium in hexanes (62.5 mL, 0.1 mol) was slowly added maintaining the temperature below 25°C, for example, 0°C to 20°C. THF (100 g) were added. The reaction mixture was stirred for two hours. The contents were cannulated to the dilithium salt in the first flask and the mixture stirred for two hours at 25°C. CuCl (2g, cuprous chloride) was added and the mixture was stirred for two hours at 25°C. The solids were separated from the reaction mixture by filtration, washed with hexanes (50 mL) and then dried in a vacuum.

The dry solids were dissolved with dichloromethane (500 mL) and the solutions filtered through a small bed of celite. The volume of the filtrate was reduced to 50-75 mL. The crystals separated by filtration were washed with 20 mL of dichloromethane, and dried in vacuum. Yield = 9-15 g. 15/20% yield of rac Me₂Si (2-methyl-4-phenylindenyl) -titanium dichloride having the same NMR spectrum as Figure 1.

### EXAMPLE 2

### Preparation of Rac Me₂Si(2-Methyl-4-α-Naphthylindenyl)-Titanium Dichloride

Example 1 is repeated with the 2-methyl-4-α-naphthylindenyl used as a first flask reactant instead of 2-methyl-4-phenylindene.

### EXAMPLE 3

### Preparation of Rac Me₂Si(2-Methyl-4-Anthracenyl Indene)-Titanium Dichloride

Example 1 is repeated with the 2-methyl-4-anthracenyl indene used as a first flask reactant instead of 2-methyl-4-phenylindene.

## Claims

1. A method for preparing a dialkylsilyl (2-alkyl-4-arylindenyl) titanium dichloride which comprises:
(i) reacting a 2-alkyl-4-arylindene with an alkali metal alkyl and a dihalodialkyl silane to provide a first reaction mixture in a first reaction vessel;
(ii) separately reacting in a second reaction vessel titanium tetrachloride with a second alkali metal alkyl which may be the same as or different from said first alkali metal alkyl to provide a second reaction mixture containing titanium trichloride in said second reaction vessel;
(iii) said first and second reaction mixtures are combined to produce a ligand of said dialkylsilyl (2-alkyl-4-arylindenyl) titanocene dichloride in which titanium is present in a plus three oxidation state and wherein an oxidizing agent is added to produce a third reaction mixture containing a mixture of rac and meso forms of said dialkylsilyl (2-alkyl-4-arylindenyl) titanium dichloride.

2. The claim 1 method further comprising
(iv) separating said mixture of rac and meso forms of said dialkylsilyl (2-alkyl-4-arylindenyl) titanium dichloride from said third reaction mixture.

3. The claim 2 process further comprising separating said mixture of rac and meso forms of said dialkylsilyl (2-alkyl-4-arylindenyl) titanium dichloride from.said third reaction mixture; and
(v) separating said rac from said meso form of said dialkylsilyl (2-alkyl-4-arylindenyl) titanium dichloride.

4. The claim 1 method in which said 2-alkyl-4-arylindene reacted in step (i) is 2-methyl-4-phenyl indene or 2-methyl-4-naphthyl indene or 2-methyl-4-anthracenyl indene and said step (iii) third reaction mixture contains a mixture of rac and meso forms of 2-methyl-4-phenyl indene or 2-methyl-4-naphthyl indene or 2-methyl-4-anthracenyl indene.

5. The claim 1 method wherein said 2-alkyl-4-arylindene reacted in step (i) is 2-methyl-4-phenyl indene wherein said first and second alkali metal alkyls are each n-butyl lithium and wherein said step (iii) oxidizing agent is cuprous chloride or chloroform.

## Patentansprüche

1. Verfahren zur Herstellung eines Dialkylsilyl-(2-alkyl-4-arylindenyl)titandichlorids, umfassend:
(i) die Umsetzung eines 2-Alkyl-4-arylindens mit einer Alkalimetallalkylverbindung und einem Dihalogendialkylsilan zur Bereitstellung eines ersten Reaktionsgemisches in einem ersten Reaktionsgefäß;
(ii) die gesonderte Umsetzung von Titantetrachlorid mit einer zweiten Alkalimetallalkylverbindung, die gleich oder verschieden sein kann wie die genannte erste Alkalimetallalkylverbindung, in einem zweiten Reaktionsgefäß zur Bereitstellung eines zweiten Reaktionsgemisches, enthaltend Titantrichlorid, in dem genannten zweiten Reaktionsgefäß;
(iii) die Kombination der genannten ersten und zweiten Reaktionsgemische zur Herstellung eines Liganden des genannten Dialkylsilyl-(2-alkyl-4-arylindenyl)titanocendichlorids, in dem das Titan in einem Oxidationszustand von plus drei vorliegt, und die Zugabe eines Oxidationsmittels zur Herstellung eines dritten Reaktionsgemisches, enthaltend ein Gemisch der rac- und meso-Formen des genannten Dialkylsilyl-(2-alkyl-4-arylindenyl)titandichlorids.

2. Verfahren nach Anspruch 1, **dadurch gekennzeichnet, dass** es weiterhin
(iv) die Abtrennung des Gemisches der rac- und meso-Formen des Dialkylsilyl-(2-alkyl-4-arylindenyl)titandichlorids aus dem dritten Reaktionsgemisch umfasst.

3. Verfahren nach Anspruch 2, **dadurch gekennzeichnet, dass** es weiterhin die Abtrennung des Gemisches der rac- und meso-Formen des Dialkylsilyl-(2-alkyl-4-arylindenyl)titandichlorids von dem dritten Reaktionsgemisch; und
(v) die Abtrennung der rac- von der meso-Form des Dialkylsilyl-(2-alkyl-4-arylindenyl)titandichlorids
umfasst.

4. Verfahren nach Anspruch 1, **dadurch gekennzeichnet, dass** das in Stufe (i) umgesetzte 2-Alkyl-4-arylinden 2-Methyl-4-phenylinden oder 2-Methyl-4-naphthylinden oder 2-Methyl-4-anthracenylinden ist und dass das dritte Reaktionsgemisch der Stufe (iii) ein Gemisch der rac- und meso-Formen von 2-Methyl-4-phenylinden oder von 2-Methyl-4-naphthylinden oder von 2-Methyl-4-antracenylinden enthält.

5. Verfahren nach Anspruch 1, **dadurch gekennzeichnet, dass** das in Stufe (i) umgesetzte 2-Alkyl-4-arylinden 2-Methyl-4-phenylinden ist, wobei die erste und die zweite Alkalimetallalkylverbindung jeweils n-Butyllithium ist und wobei das in der Stufe (iii) eingesetzte Oxidationsmittel Kupfer(I)-chlorid oder Chloroform ist.

## Revendications

1. Procédé pour préparer un dichlorure de dialkylsilyl(2-alkyl-4-arylindényl)titane qui comprend :
i) la réaction d'un 2-alkyl-4-arylindène avec un composé alkylique de métal alcalin et un dihalogénodialkylsilane pour donner un premier mélange réactionnel dans un premier récipient réactionnel ;
ii) la réaction séparée dans un deuxième récipient réactionnel de tétrachlorure de titane avec un deuxième composé alkylique de métal alcalin qui peut être identique audit premier composé alkylique de métal alcalin ou différent de celui-ci pour donner un deuxième mélange réactionnel contenant du trichlorure de titane dans ledit deuxième récipient réactionnel ;
iii) la combinaison desdits premier et deuxième mélanges réactionnels pour produire un ligand dudit dichlorure de dialkylsilyl(2-alkyl-4-arylindényl)titanocène dans lequel le titane est présent dans un état d'oxydation +3 et où un agent oxydant est ajouté pour produire un troisième mélange réactionnel contenant un mélange de formes rac et méso dudit dichlorure de dialkylsilyl(2-alkyl-4-arylindényl)titane.

2. Procédé selon la revendication 1, comprenant en outre
iv) la séparation dudit mélange de formes rac et méso dudit dichlorure de dialkylsilyl(2-alkyl-4-arylindényl)titane à partir dudit troisième mélange réactionnel.

3. Procédé selon la revendication 2, comprenant en outre la séparation dudit mélange de formes rac et méso dudit dichlorure de dialkylsilyl(2-alkyl-4-arylindényl)titane à partir dudit troisième mélange réactionnel ; et
v) la séparation de ladite forme rac à partir de ladite forme méso dudit dichlorure de dialkylsilyl(2-alkyl-4-arylindényl)titane.

4. Procédé selon la revendication 1, dans lequel ledit 2-alkyl-4-arylindène réagissant dans l'étape (i) est le 2-méthyl-4-phénylindène ou le 2-méthyl-4-naphtylindène ou le 2-méthyl-4-anthracénylindène et ledit troisième mélange réactionnel de l'étape (iii) contient un mélange de formes rac et méso de 2-méthyl-4-phénylindène ou de 2-méthyl-4-naphtylindène ou de 2-méthyl-4-anthracénylindène.

5. Procédé selon la revendication 1, dans lequel ledit 2-alkyl-4-arylindène réagissant dans l'étape (i) est le 2-méthyl-4-phénylindène où lesdits premier et deuxième composés alkyliques de métal alcalin sont chacun le n-butyl-lithium et où ledit agent oxydant de l'étape (iii) est le chlorure cupreux ou le chloroforme.
